# EUROPEAN PATENT APPLICATION

(11) **EP 1 297 998 A1**
(43) Date of publication of application: **02.04.2003**
(21) Application number: 01203663.8
(22) Date of filing: 26.09.2001
(51) Int. Cl.: B60P 1/54, B66B 9/16

(54) **Arrangement for transportation of products such as furniture**

(71) Applicant: Aantjes, Aart, 2967 LA Langerak (NL)
(72) Inventor: Aantjes, Aart, 2967 LA Langerak (NL)
(74) Representative: Merkelbach, B.

(57) **Abstract**

The invention relates to an arrangement for transportation of products in particular furniture which consists of a truck of transport van and a container with a closing and loading platform. Behind the driver's cabine and in front of said container a crane is installed.
To prevent transportation mainly by manpower of heavy and/or sizeable product or furniture from a transport van to the required place especially if it must be put down on floors of high buildings, according to the invention the arrrangement is characterised in that the crane supporting arms (5) with their steering devices (6) being arranged above said container (10) and at the end of said crane a hingable supporting or bearing device (7) is connected to which end (8) a box of carrier (13) is connectable in which furniture or the like products can be transported directly from said container (10) to a delivery place in a previously determined or desired position.

## Description

The invention relates to an arrangement particularly suitable for transportation and delivering relatively voluminous products or furniture on the spot, which arrangement mainly consists of a vehicle, such as a truck or transportation van, to which behind the driver's cabin a container suitable for transportation of voluminous products such as furniture is arranged, said container is provided with a hingable closing and loading flap or platform on the side away from the driver's cabin or end part of said container, behind the driver's cabin and front of said container the support and turning point of a telescopic and movable crane is installed.

Arrangements which mainly consists of a truck or transportation van, container and a crane that may be installed on such a truck by means of which voluminous products, such as e.g. large and often relatively heavy furniture can be transported and delivered, are known. In these arrangements the furniture is transported to the delivery place firstly by moving the furniture out of the container by manpower to the containers' loading flap or platform at the end of the container. By means of the crane the furniture is placed on the ground and often further moved to the place of delivery i.e. a house or office by manpower. This transportation and delivery on the spot of such a furniture is, especially physically, experienced as very cumbersome by those who must lift, carry and put the heavy and often sizeable furniture into a house or other building. This difficulty is even more felt when such a furniture must be transported via (narrow) staircases to a higher floor of a building.
A solution for this problem is found by the system as shown in the German patent specification 296 02 401 according to which a piece of furniture is placed on a vertically lifting platform and moved on the roof of a container placed on a truck. The furniture on the platform is upward transported by a device which is placed on the roof of the container. The objection to this known manner of transportation, however, still remains since the furniture must be lifted or shifted from the platform by manpower to the device which activity on the roof of the container indeed is highly dangerous. Moreover, there is an additional problem in case the truck must be parked at some distance from the window or door through which the furniture should be transported due to the situation or shape of the building, so that special devices, such as loading bridges, must be applied in order to place the furniture on the spot.

The invention solves the problems indicated and is characterised in that above said container the crane supporting arms with their steering devices being arranged and at the end of said crane a hingable supporting or bearing device is connected to which end a box or carrier is connectable in which furniture can be transported directly from said container to a delivery place in a previously determined or desired position.
This arrangement now makes it possible to transport and deliver a heavy and/or voluminous furniture almost without manpower, especially safely, to any unloading place; i.e. that this piece of furniture placed in the box or carrier which by special means is connected to the supporting and steering arms of the crane can be transported safe, efficient and with very little manpower to any desired place. There can be no problems anymore in case such a piece of furniture must be delivered to (high) floors or in front of windows and doors that are difficult to reach.

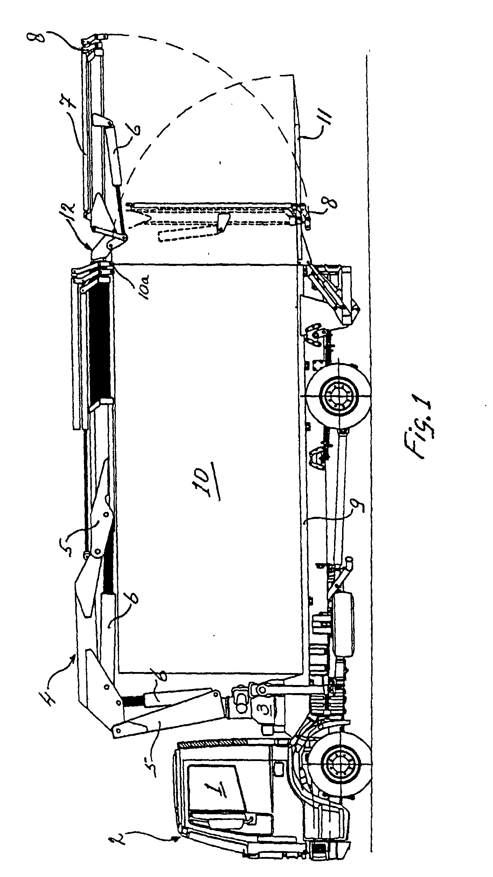

According to a preferential construction of the arrangement according to the invention the hingable connection of the supporting device with said crane, at least in the downward position of the crane (Fig. 1), being near the top rear edge of said container. Due to this construction the hingable supporting device will become an important operational means for the furniture box or carrier. As according to a favourable construction one end of the steering cylinder of the supporting device is attached to the hingable connection with the crane the advantage is obtained that the supporting device can be effectively used to connect the box provided with the furniture from its position on the platform to any direction by means of the crane to which this device is connected.

An effective construction of the arrangement is characterised in that the supporting device at its open end comprises coupling or fastening means to which the furniture box or carrier can be connected. Besides due to the measure that the fastening means in the folded downward position of the supporting device is near or at the surface of the loading flap or platform the furniture taken out of the container can now be put in the carrier and easily moved from the platform.
Preferably the furniture carrier being connectable to the supporting device which thus is hingable connected to the crane, at its bottom is provided with a frame to which wheels as well as a coupling element are mounted which element can be attached to the fastening means of the supporting device.
Another construction that can be applied with advantage is characterised in that the bottom of said carrier is provided with a centrally arranged bearing element on which the carrier can rotate and which element is connected to said frame by a bar attached to said coupling element.

According to the invention this arrangement provides an efficient, cost-effective, safely transportation of furniture to the spot or delivery place, because the furniture box or carrier can be safely transported and put on the unloading place, coupled to the hinged supporting device of the crane as an easily rolling container starting from the main container on the truck, via the loading flap or platform in different directions and heights, only depending on length and swinging capacity of the crane.

The invention will hereafter be further explained by the description of the figures due to which other advantages of the invention will become clear:
Fig. 1 shows the side view of the arrangement according to the invention;
Fig. 2 shows schematically the arrangement according to Fig. 1, whereby a carrier or furniture box is coupled to the crane supporting device;
Fig. 3 shows the arrangement according to Fig. 2 with the carrier lifted;
Fig. 4 shows the arrangement with the crane extended and the carrier at the supporting system transported near a high window or door opening of a building;
Fig. 5 shows a side view of a carrier according to the invention;
Fig. 6 shows the front view of the carrier according to Fig. 5;
Fig. 7 shows a furniture box or carrier partly folded.

It is noted that in the figures for the same parts also the same reference numbers will be used.

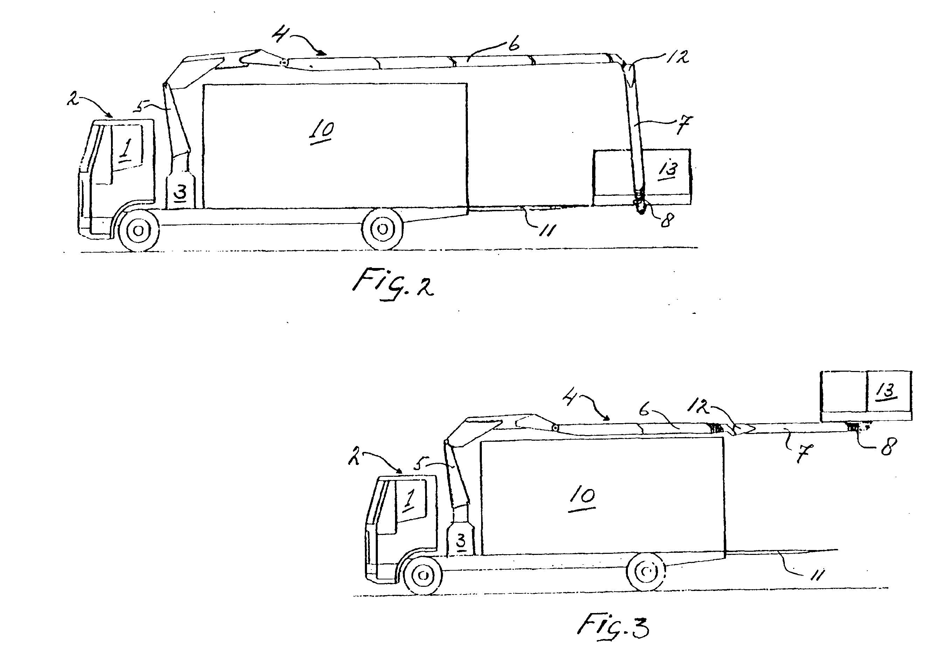

According to Fig. 1 the support and turning point 3 of the crane 4 has been mounted behind the driver's cabin 1 of the transport van or truck 2. The crane 4 is further equipped with hinged and telescopic bearing arms or bars 5 which can be steered in the known manner by (hydraulic) cylinders 6 in such a way that the crane 4 can be extended and/or turned at different angles and heights. According to the invention a hinged supporting device 7 is provided at the end of crane 4 and which is also equipped with one or more steering cylinders 6. The end 8 of the device 7 comprises means to which a specific box or carrier 13 (see Fig. 2) can be fastened. In this carrier one or more pieces of furniture can be fitted and transported. On the platform 9 of the truck 2 a closed container 10 has been placed suitable to contain and to transport different kind of furniture or other voluminous products. The back of the container 10 comprises a closing flap 11 which also forms a loading element or platform from which furniture out of the container 10 can be placed and removed. Obviously, this platform is also suitable for receiving the carrier 13 on the device 7 with products that shall be put in the container 10.
The supporting device 7 is connected to the crane 4 by the hinge construction 12 which according to Fig. 1 finds itself at the top rear edge 10a of the container 10. Also by this illustration the device 7 with the fastening means 8 ends in the downward - dotted - position near or on the loading flap or platform 11. During road-transportation the supporting device 7 is arranged in the folded downward position behind the flap or platform 11 which closes the (back) of the container 10.
Fig. 2 shows schematically the truck according to Fig. 1 which position is indicated after having removed a furniture from the container 10 by the supporting device 7 to which the furniture box or carrier 13 is connected by the fastening means 8. It is noted that the carrier 13 could have been loaded with furniture already inside the container 10 or on the platform 11 depending on the possibilities one can have. The loaded carrier 13, which is hanging on the supporting device 7 just outside the loading flap or platform 11 is ready for transportation to a place desired.

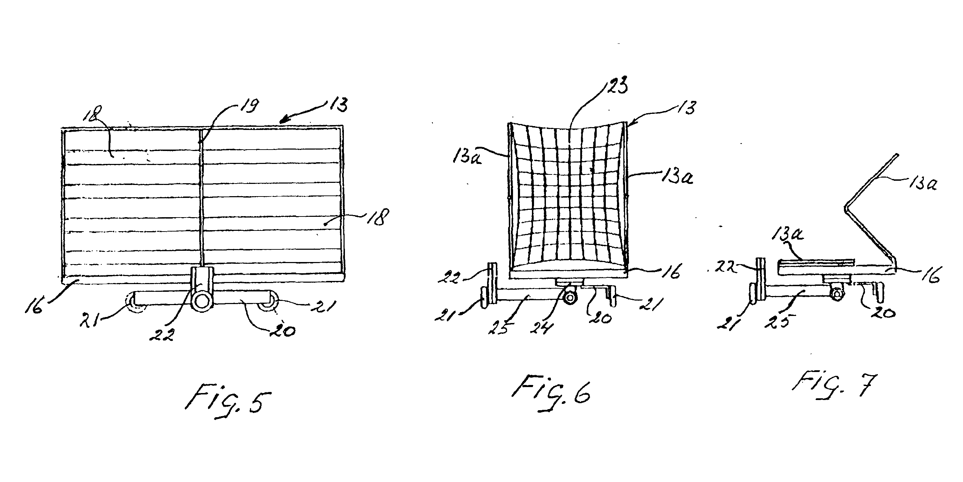

It is noted that managing the transportation and placing of the furniture carrier 13 is basically done from the cabin 1 of the truck 2. It will, however, also be possible to have this steering procedure done from outside the driver's cabin 1.

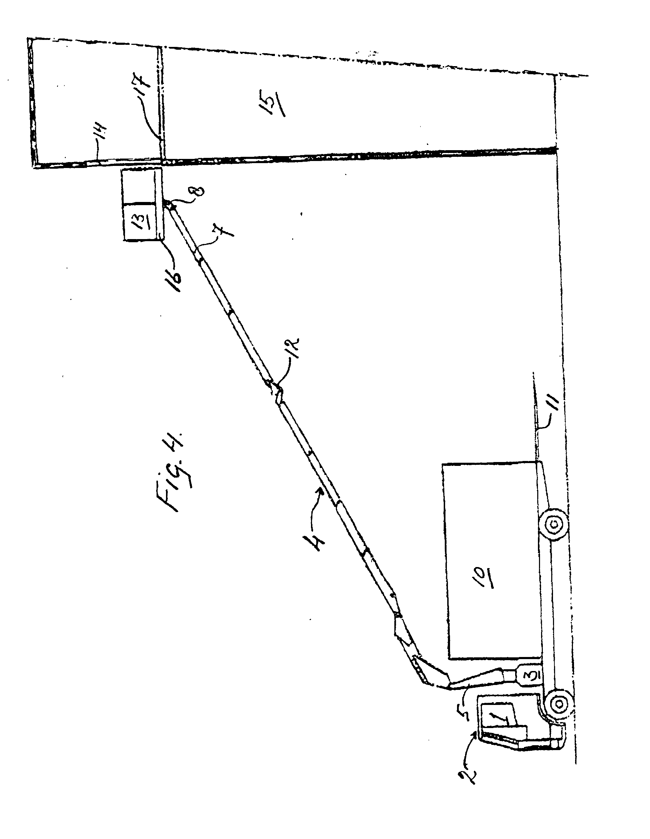

Fig. 3 reflects the position of the hinged device 7 which is brought in the extension of the bearing and steering arms 5,6 of crane 4 present over the top of the container 10. Carrier 13, attached to the device 7, is then lifted higher than the container 10. The attachment of carrier 13 to the fastening means 8 is executed in such a manner that the carrier 13 coming out of the container 10 over the loading flap 11 shall remain in a horizontal position and lifted in that position such as indicated by this figure.
Measures have been taken to prevent damaging or worse falling out of furniture from carrier 13. These measures will be explained by the elucidation of figures 5 - 7.
Fig. 4 shows in particular the position of crane 4 with the fumiture carrier 13 transported near an access window or door 14 of a (high) flat, office or other type of building 15. Bottom 16 of carrier 13 is then brought at the same level as the floor 17 of the building, such that the furniture can be taken from the carrier on the spot with little manpower. It is also possible to disengage carrier 13 from the device 7 and to put it on the floor for further transportation and unloading the furniture on the spot inside the building 15.
Fig. 5 shows a side view of the furniture box or carrier 13. The sidewalls of it are mainly composed of wooden lathes 18, which are mounted in a framework 19. On its bottom 16 a frame 20 is provided with wheels 21. A coupling element 22 is applied to this frame 20 which is suitable for attachment to the fastening means 8 of the supporting device 7 and at least during transportation being able to keep the position of the carrier (horizontally) constant in order to safely loading and unloading the furniture from the carrier 13.
Fig. 6 shows the front or rear view of the carrier 13, which is provided with nets 23 attached to suitable places of the framework 19, in such a way that the furniture that is put in the carrier 13 at least during transportation, cannot shift and be damaged. The lathes 18 and framework 19 will form the sidewalls 13a of the carrier 13. Centrally on the bottom 16 of the fumiture carrier 13 a bearing element 24 is applied due to which the carrier can turn around its vertical axis. The element 24 is connected via a bar 25 to the coupling element 22 and frame 20 such that the carrier 13 will be a stable unit that can be easily manoeuvred.
Fig. 7 shows the front or rear view of the box or carrier 13 as well as the position according to which the side walls 13a are (partly) folded and laid down on the bottom 16 due to which the carrier 13 can be easily stored in the container 10.

Working of the arrangement according to the invention is briefly summarised as follows: Mostly the hingable supporting device 7, which during road-transportation is flapped down before the closed loading platform 11. For transportation of furniture or other voluminous products, the device 7 is turned up to the extension of the crane 4 steered from the driver's cabin 1 (see Fig. 3), after which the loading platform 11 is brought in the (horizontal) position (Fig. 2 and 3). Then from the container 10 the (unfolded) furniture carrier 13 is provided with the nets 23 - in the correct places to prevent damages to the furniture that must be unloaded - after which to the coupling element 22 of carrier 13 is attached to the fastening means 8 of the device 7 in such a way that the carrier gets a constant (horizontal) transport position and can be further lifted in this position from the loading platform 11 on the supporting device 7 to the position as is shown in Fig. 3. Then the crane 4, on the telescopic arms 5 by means of the pressure and steering cylinders 6, is directed and extended to the desired (height), as shown in Fig. 4, so that the carrier 13 with the furniture is brought and unloaded on the required place. During the whole procedure very little manpower has been used and yet efficient, effective as well as safe transportation of furniture has been realised.
It is noted that removing furniture, voluminous products or the like from houses or buildings into the container 10, obviously, will be conducted in reverse transportation order.

## Claims

1. Arrangement for transportation of products in particular furniture which mainly consists of a vehicle, such as a truck or van, to which behind the driver's cabin a container suitable for transportation of relatively voluminous products such as furniture is arranged, said container is provided with a hingable closing and loading flap or platform on the side away from the driver's cabin or end part of said container, behind the driver's cabin and front of said container the support and turning point of a telescopic and movable crane is installed, **characterised in that** above said container (10) the crane supporting arms (5) with their steering devices (6) being arranged and at the end of said crane a hingable supporting or bearing device (7) is connected to which end (8) a box or carrier (13) is connectable in which furniture or the like products can be transported directly from said container (10) to a delivery place in a previously determined or desired position.

2. Arrangement according to claim 1, **characterised in that** the hingable connection (12) of said supporting device (7) with said crane (4), at least in the downward position of said crane (Fig.1), being near the top rear edge (10a) of said container (10).

3. Arrangement according to claim 1 or 2, **characterised in that** one end of the steering cylinder (6) of said supporting device (7) is attached to the hingable connection (12).

4. Arrangement according to claim 1 - 3, **characterised in that** said supporting device (7) at its open end comprises coupling or fastening means (8) to which said (furniture) box or carrier (13) can be connected.

5. Arrangement according to one or more of the preceding claims, **characterised in that** said fastening means (8) in the folded downward position of said supporting device (7) is near or on the surface of the loading flap or platform (11) of said container (10).

6. Arrangement according to one or more of the preceding claims, **characterised in that** said device (7) at least during road-transportation is arranged in a downward position behind the loading and closing flap or platform (11) of the said container (10).

7. Arrangement according to one or more of the preceding claims and claim 1, **characterised in that** said box or carrier (13) connectable to said supporting device (7) at its bottom being provided with a frame (20) to which wheels (21) as well as a coupling element (22) are mounted that can be attached to fastening means (8) of said supporting device (7).

8. Arrangement according to one or more of the preceding claims and claim 7, **characterised in that** the bottom (16) of said carrier (13) is provided with a centrally arranged bearing element (24) on which the carrier can rotate and which element is connected to said frame (20) by a bar (25) attached to said coupling element (22).

9. Arrangement as described above and shown by the figures.

10. Vehicle, transportation van or truck as described above and shown by the figures.

## Amended claims

### Amended claims in accordance with Rule 86(2) EPC.

**1.** Arrangement for transportation and delivery of furniture, which mainly consists of a vehicle, such as a truck or van, to which behind the driver's cabin a container suitable for transportation of furniture is arranged, said container is provided with a door which is at the other end away from the driver's cabin, existing of a hingeable closing and loading flap or platform whereupon furniture can be placed to be delivered from or restore in the container, **characterised in that** behind the driver's cabin (1) a support and turning point of a telescopic and movable crane (3) is secured and over said container (10) the system of bearing arms and cylinders (5,6) with the steering devices for the crane (4) are arranged, whereby said crane (4) at one end comprises a hingeable supporting device (7) on which a box or carrier (13) for furniture can be connected for transportation directly from said container (10) to a delivery place or the other way around.

**2.** Arrangement according to claim 1, **characterised in that** the hingable connection (12) of the supporting device (7) with said crane, at least in the inactive position of said crane, being near the top rear edge (10a) of said container (10).

**3.** Arrangement according to claim 1 or 2, **characterised in that** one end of the steering cylinder (6) of said supporting device (7) is attached to the hingable connection (12).

**4.** Arrangement according to claim 1 - 3, **characterised in that** said supporting device (7) at its open end comprises coupling or fastening means (8) to which said (furniture) box or carrier (13) can be connected.

**5.** Arrangement according to one or more of the preceding claims, **characterised in that** said fastening means (8) in the folded downward position of said supporting device (7) is near or on the surface of the loading platform (11) of said container (10).

**6.** Arrangement according to one or more of the preceding claims, **characterised in that** said supporting device (7) at least during the inactive position of crane (4) is arranged in a downward position behind the closed loading platform (11) of said container (10).

**7.** Arrangement according to one or more of the preceding claims and claim 1, **characterised in that** said carrier (13) which is connectable to said supporting device (7) at its bottom being provided with a frame (20) to which wheels (21) as well as a coupling element (22) are mounted which can be attached to the fastening means (8) of said supporting device (7)

**8.** Arrangement according to one or more of the previous claims and claim 1, **characterised in that** the bottom (16) of said carrier (13) is provided with a centrally arranged bearing element (24) on which said carrier can rotate and which element is connected to said frame (20) via a bar (25) as attached to said coupling element (22).

**9.** Arrangement according to one or more of the previous claims, **characterised in that** the sidewall (13a) of the furniture carrier (13) is mainly composed of lathes (18) which are attached to a framework (19) to which nets (23) can be fastened.

**10.** Arrangement according to one or more of the previous claims, **characterised in that** the sidewalls or partitions (13a) of carrier (13) can be folded and turned down to the bottom of said carrier.
